# EUROPEAN PATENT APPLICATION

(11) **EP 4 737 391 A1**
(43) Date of publication of application: **06.05.2026**
(21) Application number: 24306826.9
(22) Date of filing: 30.10.2024
(51) Int. Cl.: C01B 3/38, B01D 53/26

(54) **HYDROGEN PRODUCTION PROCESS AND PLANT**

(71) Applicant: Technip Energies France, 92741 Nanterre Cedex (FR)
(72) Inventor: Karnik, Abhijeet, 92741 Nanterre Cedex (FR); Lopez, Jorge Alberto Pena, 92741 Nanterre Cedex (FR); Rowland, Nicole, 92741 Nanterre Cedex (FR); Canuso, Vito, 92741 Nanterre Cedex (FR)
(74) Representative: Edson, Russell Gregory

(57) **Abstract**

A process and production plant for producing hydrogen. In one example of the process, a reformer reaction unit for generating a reformate including hydrogen is heated using a burner that is fed fuel gas, a high-purity oxygen gas, and recycled flue gas. The burner generates a flue gas that is at least 95% water and carbon dioxide. The flue gas generated in this manner may be optimized for subsequent carbon-dioxide capture processes.

## Description

### RELATED FIELDS

Plants and processes for producing hydrogen from a hydrocarbon and capturing the carbon dioxide produced by such plants and processes.

### BACKGROUND

A common technique used today for producing hydrogen is steam-methane reforming in which high temperature steam is used to produce hydrogen from a hydrocarbon (e.g. a methane source such as natural gas). Methane reacts with steam in the presence of a catalyst to produce hydrogen, carbon monoxide, and small amounts of carbon dioxide.

CH₄ + H₂O (+heat) → CO + 3H₂

In a subsequent reaction the produced carbon monoxide may be further reacted with water in the presence of a catalyst to produce more hydrogen and carbon dioxide in a "water-gas shift reaction."

CO + H₂O → CO₂ + H₂

The heat of the steam-methane reforming reaction is typically supplied in a furnace containing multiple tubes filled with the catalyst. The combustion heat is transferred from the hot flue gas to the tubes through radiative and convective heat transfer.

A significant by-product of steam-methane reforming is carbon dioxide. In addition to being a side product of the stream-methane reforming and water-gas shift reactions, significant quantities of carbon dioxide are produced from combustion of the carbon-based fuel to heat the hydrocarbon and steam in the reformer to the temperatures necessary for the steam-methane reforming reaction to occur.

Growing environmental concerns have made it increasingly desirable to minimize the amount of carbon dioxide released into the atmosphere in connection with industrial processes such as hydrogen production processes. Amine-based pre-combustion and post-combustion technologies are known; however, these chemical absorption / adsorption technologies are energy intensive and high cost, and do not result in maximum CO₂ capture. There remains room for improvement.

### SUMMARY

One example is a process for producing a product gas (the product gas including or constituting a hydrogen gas) from a hydrocarbon. The process in this example includes introducing a hydrocarbon and a steam into a reformer reaction unit to generate a reformate including or constituting a hydrogen gas. As part of generation of the reformate, heat is provided to the reformer reaction unit using a burner in a radiant section of a furnace, the reformer reaction unit including at least a portion located in the radiant section of the furnace. The burner receives for combustion: (i) a fuel gas, (ii) an oxygen gas of 95.0 - 99.8 vol% oxygen, and (iii) a recycled flue gas. The oxygen gas is provided in a separate stream to the burner from the fuel gas and the recycled flue gas. The burner generates a flue gas of at least 95 vol% water and carbon in total, and a portion of the flue gas is recycled to the burner as the recycled flue gas.

In some implementations of this example, the oxygen gas received by the burner for combustion is 99.0 - 99.8 vol% oxygen.

In some implementations of this example, the flue gas flows from the radiant section of the furnace through a convection section of the furnace.

In some implementations of this example, a first portion of the flue gas is collected from or after the convection section and fed back to the burner as the recycled flue gas, and a second portion of the flue gas is collected from or after the convection section and fed to a carbon dioxide capture system in which carbon dioxide of the flue gas is separated from water of the flue gas.

In some implementations of this example, the first portion of the flue gas is collected from a flue gas recycle outlet of the convection section, with the convection section including several heat transfer coils and the flue gas recycle outlet being located upstream of at least one of the coils.

In some implementations of this example, the flue gas recycle outlet is located upstream of an economizer coil.

In some implementations of this example, the second portion of the flue gas is collected from a second outlet that is located downstream of the plurality of heat transfer coils.

In some implementations of this example, the first portion of the flue gas is collected from a flue gas recycle outlet of the convection section at a temperature that is at least 50 degrees Celsius higher than a temperature of the second portion of the flue gas collected from a second outlet of the convection section.

In some implementations of this example, the burner further receives for combustion a second fuel gas, which includes a pressure swing adsorption (PSA) purge gas generated from the reformate.

In some implementations of this example, the flue gas generated by the burner is at least 97 vol% water and carbon dioxide in total.

In some implementations of this example, at the carbon dioxide capture system, the second portion of the flue gas is cooled such that at least some of the water of the second portion of the flue gas condenses and is separated from the flue gas to generate a carbon dioxide rich stream.

In some implementations of this example, at the carbon dioxide capture system, the carbon dioxide rich stream is fed to a multi-stage compression unit in which the carbon dioxide rich stream is subjected to a plurality of cycles of compression, cooling, and condensate separation.

In some implementations of this example, at the carbon dioxide capture system, after multi-stage compression, the carbon dioxide rich stream is fed to a deoxidizer reactor in which oxygen in the carbon dioxide rich stream is reacted with hydrogen gas to generate water.

In some implementations of this example, at the carbon dioxide capture system, after the deoxidizer reactor, the carbon dioxide rich stream is fed to a dryer unit comprising a desicca nt.

In some implementations of this example, the process includes outputting from the carbon dioxide capture system a carbon dioxide product stream, with at least 99 % of the carbon dioxide in the second portion of the flue gas being outputted in the carbon dioxide product stream.

In some implementations of this example, the process includes outputting from the carbon dioxide capture system a carbon dioxide product stream, with at least 95 vol% of the carbon dioxide product stream being carbon dioxide.

In some implementations of this example, providing heat to the reformer reaction unit using the burner includes introducing the fuel gas into the burner through a fuel gas inlet of the burner, introducing the oxygen gas into the burner through an oxygen gas inlet of the burner separate from the fuel gas inlet, and introducing the recycled flue gas into the burner through a flue gas inlet of the burner separate from the oxygen gas inlet and the fuel gas inlet.

In another example, a hydrogen production plant reformer system includes a reformer reaction unit and a furnace. The reformer reaction unit is arranged to receive a hydrocarbon and a steam and to generate a reformate including a hydrogen gas. The furnace includes a radiant section and a convection section, the radiant section includes a burner arranged to heat the reformer reaction unit. The reformer reaction unit includes at least a portion located in the radiant section of the furnace. The burner includes a fuel gas inlet, an oxygen inlet separate from the fuel gas inlet and configured to receive an oxygen stream that is at least 95 vol% oxygen, and a recycled flue gas inlet separate from the fuel gas and oxygen inlets. In this example operation of the burner generates a flue gas that flows from the radiant section of the furnace through a convection section of the furnace.

In some implementations of this example, the burner, the fuel gas stream, the oxygen stream, and the recycled flue gas stream are configured such that the flue gas generated by the burner is at least 95 vol% water and carbon dioxide in total.

In some implementations of this example, the plant further includes a carbon dioxide capture system receiving a portion of the flue gas from the reformer system and separating carbon dioxide of the flue gas from water of the flue gas.

In some implementations of this example, the plant further includes a carbon dioxide capture system arranged to receive a portion of the flue gas from the reformer system, the carbon dioxide capture system including a quench tower arranged to receive the portion of the flue gas and output a carbon dioxide rich stream.

In another example a process for producing a product gas including a hydrogen gas from a hydrocarbon includes introducing a hydrocarbon and a steam into a reformer reaction unit to generate a reformate including a hydrogen gas. As part of generation of the reformate, the process includes providing heat to the reformer reaction unit using a burner in a radiant section of a furnace, the reformer reaction unit including at least a portion located in the radiant section of the furnace. The burner receives for combustion: (i) a fuel gas, (ii) an oxygen gas that is 95.0 - 99.8 vol% oxygen, and (iii) a recycled flue gas. The oxygen gas is provided in a separate stream to the burner from the fuel gas and the recycled flue gas. In this example the burner generates a flue gas that is at least 95 vol% water and carbon in total, which flows from the radiant section of the furnace through a convection section of the furnace. A first portion of the flue gas is collected from or after the convection section and fed back to the burner as the recycled flue gas, and a second portion of the flue gas is collected from or after the convection section and fed to a carbon dioxide capture system in which carbon dioxide of the flue gas is separated from water of the flue gas. In this example, the process further includes outputting from the carbon dioxide capture system a carbon dioxide product stream in which at least 99 % of the carbon dioxide in the second portion of the flue gas is outputted in the carbon dioxide product stream, and at least 95 vol% of the carbon dioxide product stream is carbon dioxide.

### BRIEF DESCRIPTION OF FIGURES

FIG. 1 shows one example of some of the components of a reformer system.
FIG. 2 shows one example of a burner of a reformer system.
FIG. 3 shows another example of a reformer system.
FIG. 4 shows another example of a reformer system.
FIG. 5 shows another example of a reformer system.
FIG. 6 shows one example of a carbon capture system usable with the reformer systems of the preceding figures.

### DETAILED DESCRIPTION

Aspects of the disclosure contribute to a new plant and process for hydrogen production that provides for 95% + and in some instances 99% + CO2 capture from the flue gas generated as part of the process. In some implementations this new plant and process generates flue gas in a manner that only requires physical separation of the CO2 from other components of the flue gas.

In one example a process produces a product gas including a hydrogen gas from a hydrocarbon. The process includes introducing a hydrocarbon and a steam into a reformer reaction unit to generate a reformate comprising a hydrogen gas. As part of generation of the reformate, heat is provided to the reformer reaction unit using a burner in a radiant section of a furnace. The burner receives for combustion: (i) a fuel gas (which may be a purge gas from a downstream pressure swing adsorption unit, a fuel gas from another source, or combinations thereof), (ii) an oxygen gas that is 95.0 - 99.8 vol% oxygen, and (iii) a recycled flue gas. In some implementations the use of oxygen gas that is 95.0-99.8 vol% oxygen in the burner as opposed to ambient air allows flue gas generated by the burner to be at least 95 vol% water and carbon dioxide in total. Flue gas with this composition may be relatively easily processed using physical CO₂ separation processes (as opposed to chemical absorption or adsorption based techniques for carbon capture), allowing for 95%+ and in some instances up to 99%+ CO₂ capture in the hydrogen production process. The oxygen gas may be provided in a separate stream to the burner from the fuel gas and the recycled flue gas, with the burner having separate inlets for the fuel gas, the recycled flue gas, and the oxygen gas. By providing the oxygen gas in a separate stream to the burner, the risk of unintended combustion outside of the burner may be decreased.

Illustrative examples follow and are given to introduce the reader to the general subject matter discussed herein rather than to limit the scope of the disclosed concepts. The following sections describe various additional features and examples with reference to the drawings but should not be used to limit the present disclosure.

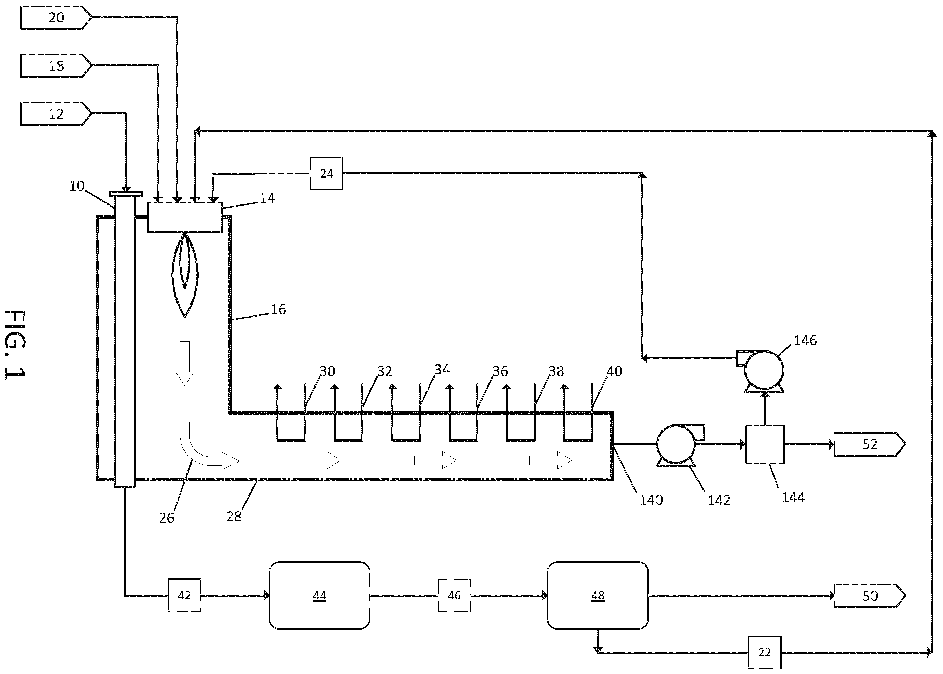

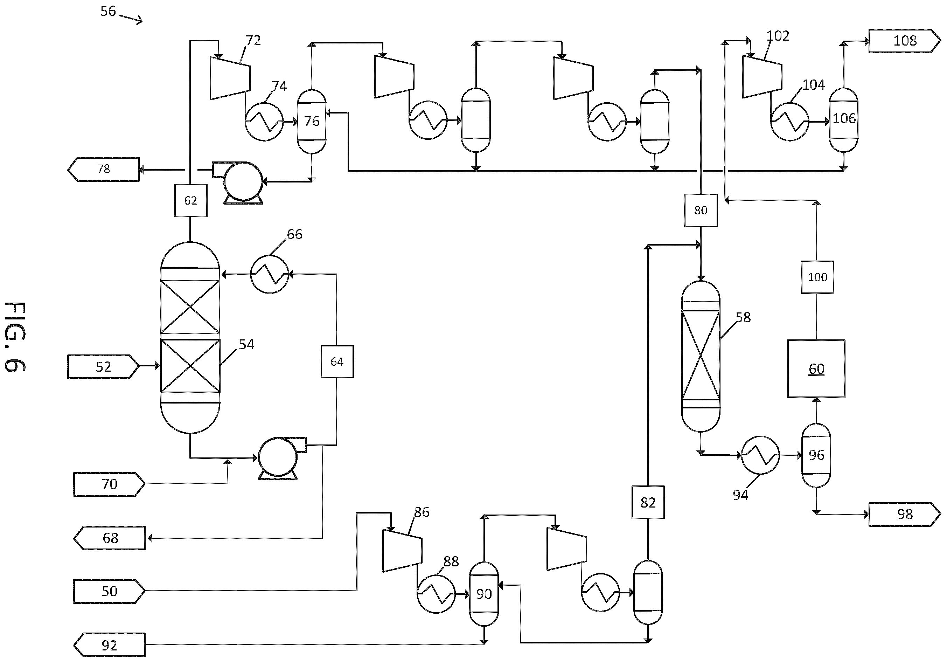

FIGS. 1 and 6 show one example of a hydrogen production plant with FIG. 1 showing an example of a reformer system that generates a hydrogen gas from a hydrocarbon and steam, and FIG. 6 showing an example of a carbon capture system for capturing carbon dioxide from a portion of the flue gas generated by the reformer system.

### Reformer System

The reformer system of FIG. 1 includes a reformer reaction unit 10 into which a mixture of hydrocarbon and steam are introduced via stream 12. The reformer reaction unit 10 includes a catalyst and generates a reformate including a hydrogen gas. Although the reformer reaction unit 10 is depicted as a single straight tube in FIG. 1, other types of reformer reaction units may be utilized, including an arrangement of several straight tubes in parallel or other arrangements and/or one or more heat-recuperating reformer reaction units. In the example shown in FIG. 1 most of the reformer reaction unit 10 is located in and extends through a radiant section 16 of a furnace. In other implementations only a portion of or the entirety of the reformer reaction unit 10 may be located in a radiant section of a furnace.

The hydrocarbon fed into the reformer reaction unit 10 may be any hydrocarbon suitable for being subjected to reformation by reaction with steam. The hydrocarbon may substantially consist of methane, such as a natural gas or biogas-based methane stream. In other implementations the hydrocarbon may be a propane gas (LPG), naphtha, or refinery off-gas.

In some implementations the hydrocarbon may be subjected to pre-treatment processes such as hydrodesulphurization. In some implementations the pre-treated hydrocarbon may receive a make-up stream including hydrogen to ensure purification of the feed in the hydrodesulfurization process. The make-up stream may come from hydrogen product gas or tail gas from a hydrogen recovery unit.

The hydrocarbon is mixed with a reformate reactant (i.e. steam) prior to being introduced into the reformer reaction unit 10. Additionally, in some implementations, the hydrocarbon and the steam may be introduced into a pre-reformer reaction unit upstream of the reformer reaction unit 10 in which an adiabatic or other process may be employed to pre-reform and unload the duty of the reforming reaction.

The hydrocarbon and steam may be introduced via stream 12 into the reformer reaction unit 10 in various ratios. In some implementations the ratio of hydrocarbon to steam introduced into the reformer reaction unit 10 may be at least 2.0 mol/mol, at least 2.5 mol/mol, or at least 3.0 mol/mol. In some implementations the ratio of hydrocarbon to steam introduced into the reformer reaction unit 10 may be 5.0 mol/mol or less, or 4.0 mol/mol or less. In some implementations a ratio of hydrocarbon to steam of 2.5 to 3.0 mol/mol may provide minimized hydrocarbon consumption and CO2 emissions.

The hydrocarbon and steam may be preheated before introducing the mixture to the reformer unit 10.

As shown in FIG. 1 at least a portion of the reformer reaction unit 10 is located in the radiant section 16 of the furnace. At the reformer reaction unit 10 the hydrocarbon and steam mixture is heated by the heat produced by burner 14 in the radiant section 16, usually to a temperature in the range of 800-950° C. The reformer reaction unit 10 contains a catalyst. In some implementations the catalyst may be a nickel (metallic or oxide catalyst) on an alumina or other support.

In some implementations the reformate generated at the reformer reaction unit 10 includes a syngas mixture of H₂, CO, CO₂, water, and methane. Inert gas such as nitrogen may also be present in the reformate. From the reformer reaction unit 10 reformate flows via stream 42 to a shift reactor 44 that converts water and CO to additional H₂ and CO₂ via the water shift reaction. In some implementations the shift reactor 44 may be a multi-stage, fixed-bed reactor containing shift catalysts to convert CO and water into additional H₂ and CO₂ according to the water-gas shift (WGS) reaction.

The syngas mixture leaving the shift reactor 44 flows via stream 46 to pressure swing adsorption (PSA) unit 48 where H₂ is separated from the other components of the syngas mixture to provide an H₂ product stream 50 that essentially consists of all or mostly H₂ (e.g. greater than 95% H₂, greater than 97% H₂, or greater than 99% H₂) and purge gas stream 22, which may be recycled or at least partially recycled back to burner 14. In other words, the purge gas stream 22 may provide a fuel gas for the burner 14. In some implementations the pressure swing adsorption unit 48 uses a bed of solid adsorbent that adsorb the impurities from stream 46 (e.g. carbon monoxide, carbon dioxide, methane, and nitrogen). The solid adsorbent may be regenerated by depressurizing and purging, with the impurities released from the solid adsorbent outputted from the PSA unit 48 via the purge gas stream 22.

In the example of FIG. 1 a burner 14 provides heat to the reformer reaction unit 10 to facilitate the reforming reaction. The burner 14 is located in a radiant section 16 of a furnace. Although the burner 14 is depicted as a single top burner in FIG. 1, other types of burners may be utilized, including single or multiple top fired, side fired, and/or bottom fired burner arrangements.

In the example of FIG. 1 the burner 14 receives for combustion a fuel gas from stream 18, an oxygen gas from stream 20, a purge gas from stream 22, and a recycled flue gas from stream 24 (which is a portion of the flue gas 26).

The fuel gas supplied via stream 18 may be a hydrocarbon fuel. In some implementations it may be a natural gas. In some implementations it may be a refinery fuel gas. In some implementations it may be naphtha (e.g. vaporized naphtha). In still other implementations the fuel gas may be another type of fuel gas.

The oxygen gas fed to the burner 14 via stream 20 is of high purity. In some implementations of the reformer system shown in FIG. 1 the oxygen gas fed to the burner 14 is at least 95 vol% O₂. In some implementations of the reformer system shown in FIG. 1 the oxygen gas fed to the burner 14 is in the range of 99.0 - 99.8 vol% O₂. In some implementations of the reformer system shown in FIG. 1 the oxygen gas fed to the burner 14 is in the range of 99.5 - 99.8 vol% O₂. In still other implementations of the reformer system shown in FIG. 1 the oxygen gas fed to the burner 14 may be at least 95 vol% O₂ , or may be at least 97 vol% O₂. In yet other implementations of the reformer system shown in FIG. 1 the oxygen gas fed to the burner 14 may be in the range of 95.0 to 99.8 vol% O₂ or in the range of 97.0 to 99.8 vol% O₂.

The purge gas introduced to the burner 14 via stream 22 may be the waste gas / tail gas from the pressure swing adsorption unit 48 discussed above. In some implementations the purge gas may include impurities in the syngas mixture leaving the shift reactor 44 via stream 46. Those impurities may include, for example, a mixture of carbon monoxide, carbon dioxide, methane, and nitrogen. The purge gas may also include some hydrogen that was not outputted by the pressure swing adsorption unit 48 via product stream 50.

In some implementations 100% (or over 80%, over 90%, or over 95%) of the waste gas / tail gas from the pressure swing adsorption unit 48 may be directed via purge gas stream 22 to burner 14 to serve as a primary fuel gas for burner 14, with additional fuel gas supplemented via stream 18 to meet the required heat duty of the reformer system.

In some implementations, the burner 14 is operated (e.g. the ratio of flue gas and oxygen fed to burner 14 is regulated) such that temperatures in the radiant section 16 reaches a maximum of 4500°F. In some implementations, the burner 14 is operated such that the temperatures in the radiant section 16 are in the range of 4250°F to 4750°F, are in the range of 4000°F to 5000°F, or are in the range of the operating limits of the furnace.

The make-up of the fuel gas, oxygen, purge gas, and recycled flue gas fed to the burner 14 and the manner in which the burner 14 is operated generates a flue gas 26 that is almost entirely water and carbon dioxide. In some implementations the flue gas 26 generated by the burner 14 is at least 95 vol% water and carbon dioxide in total. In some implementations the flue gas 26 generated by the burner 14 is at least 97 vol% water and carbon dioxide in total.

In some implementations, the flue gas generated by burner 14 has less than 5 vol% nitrogen, less than 2.5 vol% nitrogen, less than 1 vol% nitrogen, less than 0.5 vol% nitrogen, or less than 0.1 vol% nitrogen.

As discussed in greater detail in context of the carbon capture system of FIG. 6, the flue gas 26 being almost entirely water and carbon dioxide allows for efficient carbon capture using physical separation methods (as opposed to chemical absorbent or adsorbent methods).

In the example shown in FIG. 1 the oxygen gas introduced to the burner 14 is introduced in a separate inlet to the burner 14 from the fuel gas, the purge gas, and the recycled flue gas. In some implementations, introducing oxygen at a separate inlet to burner 14 reduces the risk of unintended ignition of the gases in streams 18, 22, and 24. For instance, in some cases, mixing relatively high purity oxygen with methane or other fuels present in streams 18, 22, and 24 may increase the chances of unintended ignition of those fuels outside of burner 14.

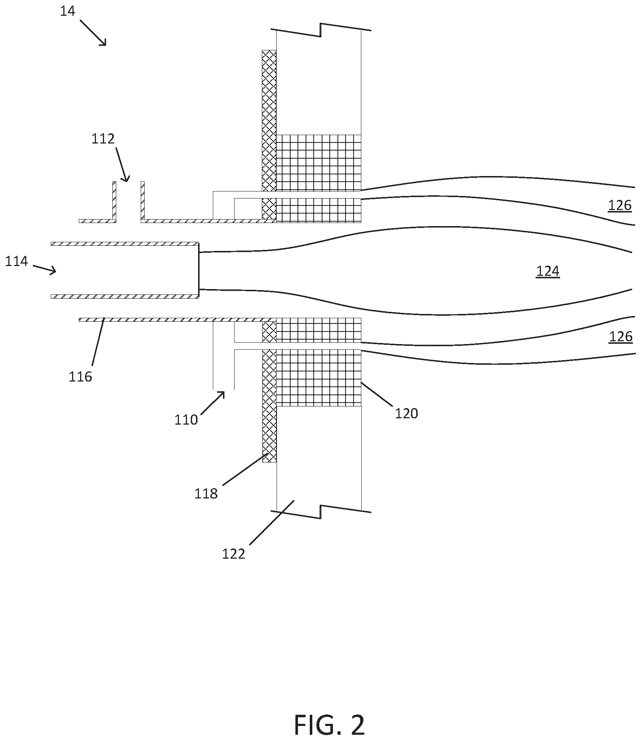

FIG. 2 shows an example of a burner 14 in which the oxygen gas introduced to the burner 14 is provided in a separate stream to the burner 14 from the fuel gas, the purge gas, and the recycled flue gas stream. In the example of FIG. 2 the fuel gas (e.g. from fuel gas stream 18 in FIG. 1) and/or purge gas (e.g. from purge gas stream 22) are introduced into the burner 14 through a fuel gas inlet 110 of the burner 14. The oxygen gas (e.g. from oxygen gas stream 20 in FIG. 1) is introduced into the burner 14 through an oxygen gas inlet 112 of the burner 14 that is separate from the fuel gas inlet 110 of the burner. The recycled flue gas (e.g. from recycled flue gas stream 24 of FIG. 1) is introduced into the burner 14 through a flue gas inlet 114 of the burner 14 that is separate from the oxygen gas inlet 112 and the fuel gas inlet 110. By introducing the oxygen gas separately, the risk of unintended ignition of the fuels outside the burner 14 may be reduced.

The example burner 14 shown in FIG. 2 includes a housing 116, a flange 118 extending outwardly from the housing 116, and a burner tile 120. The burner is mounted in and extends through the furnace housing 122. The example burner 14 shown in FIG. 2 is configured to mix the oxygen with the other gases introduced by inlets 110 and 114, resulting in combustion including a primary flame 124 and fuel stage flame 126.

FIG. 2 is just one example of a burner in which oxygen is introduced by a separate inlet from other gases. Other burner configurations are also possible.

Returning to the the example shown in FIG. 1 the burner 14 generates a flue gas 26 that flows from the radiant section 16 of the furnace through a convection section 28 of the furnace. The convection section includes several heat transfer coils 30 - 40 allowing transfer of heat from the flue gas 26 to fluids flowing through the heat transfer coils 30-40. Merely by way of example, the heat transfer coils 30-40 may include, in a variety of orders and arrangements, one or more of: coils for steam generation (including steam for use in reformer stream 12 and/or steam used for other purposes), feed pre-heating (e.g. pre-heating reformer stream 12 or the hydrocarbon gas and/or steam components of the reformer stream 12 prior to mixing with one another), steam super-heating, boiler water pre-heating, oxygen feed pre-heating, and/or flue-gas pre-heating prior to being re-cycled back to burner 14.

After passing the heat transfer coils 30-40, a first portion of the flue gas 26 is collected from or after the convection section 28 and fed back to the burner 14 as recycled flue gas via stream 24, and a second portion of the flue gas 26 is collected from or after the convection section 28 and fed to a carbon dioxide capture system via stream 52. As discussed in further detail below, at the carbon dioxide capture system, carbon dioxide of the flue gas is separated from water of the flue gas.

### Alternative Reformer System Configurations

As discussed above in the context of FIG. 1, a first portion of the flue gas 26 is collected from or after the convection section 28 and fed back to the burner 14 as recycled flue gas via stream 24, and a second portion of the flue gas 26 is collected from or after the convection section 28 and fed to a carbon dioxide capture system in which carbon dioxide of the flue gas 26 is separated from water of the flue gas 26. FIGS. 1, 3, 4, and 5 show different configurations for how the first and second portions of the flue gas 26 may be collected.

In FIG. 1 the flue gas 26 is collected from the convection section 28 downstream of the heat transfer coils 30-40 at flue gas outlet 140 and assisted by blower 142. In other words, the flue gas 26 is collected from the convection section 28 after passing all of the heat transfer coils 30-40. From blower 142 the flue gas 26 is separated into two portions at divider 144 in which a first portion of the flue gas 26 is recycled back to the burner 14 via stream 24 (assisted by blower 146) and a second portion of the flue gas 26 is sent to the carbon dioxide capture system via stream 52. Both the first portion and the second portion of the flue gas 26 are collected downstream of heat transfer coils 30-40 in this example.

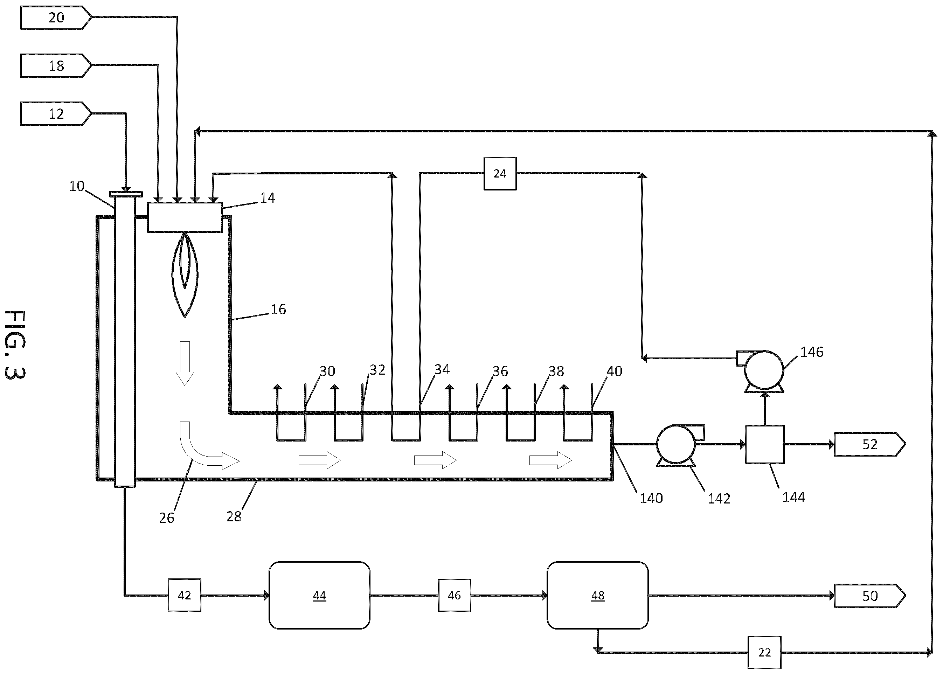

FIG. 3 also shows an example in which both the first portion and the second portion of the flue gas 26 are collected downstream of the heat transfer coils 30-40. In this example, the coils 30-40 remove heat from the flue gas 26 as it flows through the convection section 28 such that the temperature of the flue gas 26 is significantly lower by the point it reaches and is collected at the flue gas outlet 140. For instance, the most downstream coil 40 may be an economizer coil that reduces the temperature of the flue gas by at least 100 degrees Celsius (or by at least 50 degrees Celsius or by at least 125 degrees Celsius) beyond what the other upstream coils 30-38 have already reduced the temperature of the flue gas 26. In some implementations the economizer coil 40 may reduce the temperature of the flue gas from 315 degrees Celsius 150 degrees Celsius, or may reduce the temperature of the flue gas from a temperature in the range of 250-350 degrees Celsius to a temperature in the range of 100-200 degrees Celsius, or may reduce the temperature of the flue gas from a temperature in the range of 275-325 degrees Celsius to a temperature in the range of 125-175 degrees Celsius.

In the examples of FIGS. 1 and 3 the blowers 142, 146 used to facilitate flow of the flue gas 26 portions through streams 24 and 52 are downstream of all the heat transfer coils 30-40 of the convection section. In some implementations, because the blowers 142, 146 are downstream of all the heat transfer coils 30-40, the blowers 142, 146 need only be rated for use with gases below 400 degrees Celsius, or below 375 degrees Celsius, or below 350 degrees Celsius.

In the example of FIG. 3, like the example of FIG. 1, the flue gas 26 is separated into two portions by divider 144, with one of the portions recycled back to the burner 14 via stream 24. In the example of FIG. 3, stream 24 is fed through pre-heat coil 34 to heat stream 24 prior to introduction into the burner. In some implementations the pre-heat coil 34 may be configured to heat stream 24 to a temperature in the range of 250-350 degrees Celsius, or to a temperature in the range of 275-325 degrees Celsius. Pre-heating stream 24 may be used to increase the efficiency of burner 14.

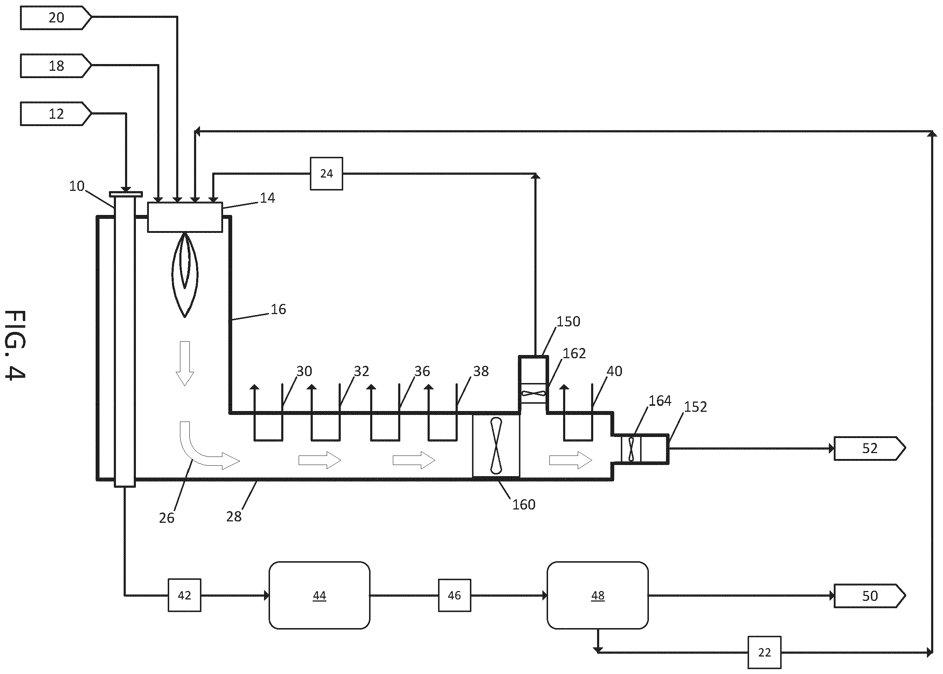

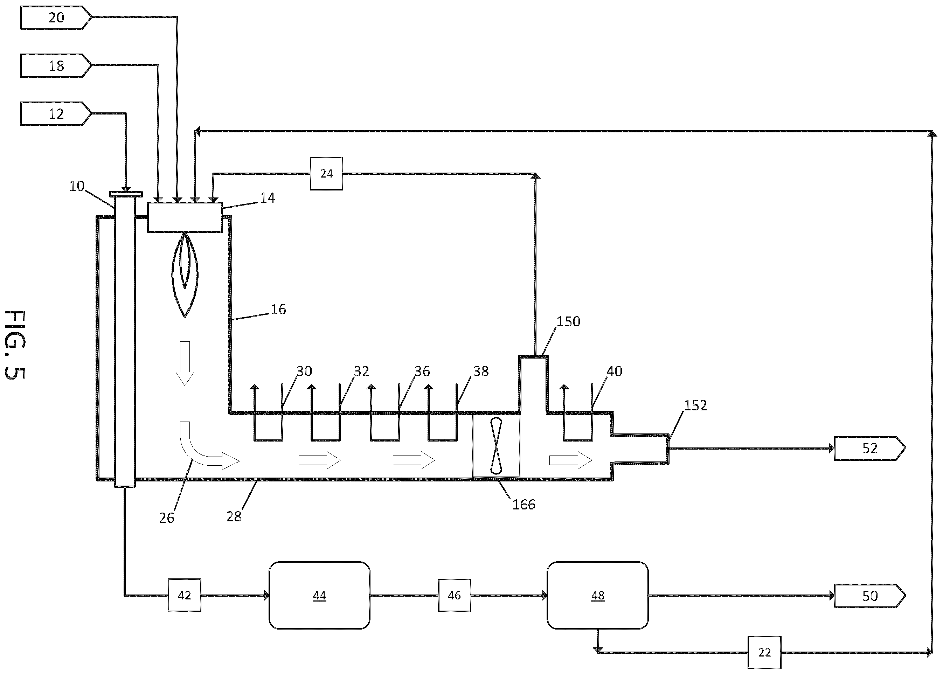

FIGS. 4 and 5 show alternative configurations of reformer systems in which one portion of the flue gas 26 is collected from a flue gas recycle outlet 150 of the convection section 28, in which the flue gas recycle outlet 150 is located upstream of at least one of the heat transfer coils 30-40. More specifically, in FIGS. 4 and 5, the flue gas recycle outlet 150 is located upstream of the economizer coil 40. A second outlet 152 located downstream of all the heat transfer coils 30-40 (including the economizer coil 40) collects the remaining portion of the flue gas 26 to be fed to the carbon dioxide capture system via stream 52.

In the examples of FIGS. 4 and 5, the portion of the flue gas 26 collected at the flue gas recycle outlet 150 is collected at a higher temperature than the portion of the flue gas 26 collected at the second outlet 152. In some implementations the portion of the flue gas 26 collected at the flue gas recycle outlet 150 is collected at a temperature that is at least 50 degrees Celsius, or at least 100 degrees Celsius, or at least 150 degrees Celsius higher than the portion of the flue gas 26 collected at the second outlet 152. In some implementations the portion of the flue gas 26 collected at the flue gas recycle outlet 150 is collected at a temperature in the range of 250-350 degrees Celsius, or to a temperature in the range of 275-325 degrees Celsius.

In the example of FIGS. 4 and 5, the portion of the flue gas 26 collected at the flue gas recycle outlet 150 is collected upstream of the economizer coil 40. In other implementations, the flue gas recycle outlet may be in other locations. For instance, the flue gas recycle outlet may be located upstream of two or more coils in the convection section and there may be an even greater temperature differential between the flue gas collected at the flue gas recycle outlet than the flue gas collected at the second outlet. For example, the portion of the flue gas collected at the flue gas recycle outlet may be collected at a temperature of 450 degrees Celsius or higher.

In the examples of FIGS. 4 and 5, the portion of the flue gas 26 collected at the flue gas recycle outlet 150 is collected at a temperature such that it is unnecessary to pre-heat the recycled flue gas stream 24 before introducing it to the burner 14. In at least some implementations this may simplify the reformer system (by removing the need for one of the heat transfer coils) and may also increase the efficiency of the reformer system (by avoiding a temperature cycle in which the portion of the flue gas 26 for recycle to the burner is cooled down prior to being reheated). The configuration shown in the examples of FIGS. 4 and 5 may also decrease the risk of carbonic acid formation in the piping and other fluid handling components used for stream 24, since stream 24 is collected and remains at a relatively high temperature from collection to delivery to the burner 14. The configuration shown in the examples of FIGS. 4 and 5 may also reduce fuel firing rates for the burner 14, since the burner 14 will have a lower overall duty because it will be unnecessary to pre-heat the recycled flue gas stream 24.

FIGS. 4 and 5 show different configurations for blowers in the convection section 28 that may be used to facilitate the flow of flue gas 26.

The example of FIG. 4 uses three blowers, with one blower 160 located upstream of both the flue gas recycle outlet 150 and the second outlet 152 and upstream of the economizer coil 40, one blower 162 located at the flue gas recycle outlet 150 and also upstream of the economizer coil 40, and one blower 164 located at the second outlet 152 and downstream of the economizer coil 40. In the example of FIG. 4 at least blowers 160 and 162 may have temperature ratings sufficient to handle flue gas 26 temperatures in the range of at least 250-500 degrees Celsius, or at least 300-450 degrees Celsius.

The example of FIG. 5 uses a single blower 166 that is upstream of the outlets 150, 152 and the economizer coil 40. In the example of FIG. 5 blower 166 have a temperature rating sufficient to handle flue gas 26 temperatures in the range of at least 250-500 degrees Celsius, or at least 300-450 degrees Celsius.

### Carbon Dioxide Capture System

FIG. 6 shows an example of a carbon dioxide capture system. The carbon dioxide capture system receives a portion of the flue gas from the reformer system via stream 52. The carbon dioxide capture system includes a quench tower 54, a multi-stage compression unit 56, a deoxidizer reactor 58, and a dryer unit 60.

In this particular example, the portion of the flue gas from reformer system is initially fed via stream 52 to quench tower 54. At the quench tower 54 the flue gas is cooled (e.g to below 150°F, in the range of 125°F - 175°F, or in the range of 100°F - 212°F) such that at least some of the water in the flue gas condenses and is separated from the flue gas, generating a carbon dioxide rich stream 62. At the quench tower 54 the flue gas is flowed upwardly through one or more levels of packing while water is flowed counter-currently to exchange heat from the hot feed gas into the relatively cool water. As a result, most of the water in the flue gas will condense, such that resulting carbon dioxide rich stream 62 will be primarily carbon dioxide with some water. Hot water exits the quench tower 54 and is recirculated via recirculation loop 64 and re-cooled by heat exchanger 66 (or in other implementations, an air cooler or water cooler) such that it can be fed back into the quench tower 54. Water in the recirculation loop 64 may be periodically purged via purge line 68 and re-supplied with fresh water via line 70 to avoid accumulation of contaminants in the recirculated water (e.g. remnants of the flue gas that may have condensed in the quench tower 54).

From the quench tower 54 the carbon dioxide rich stream 62 is fed to the multi-stage compression unit 56. At each stage the carbon dioxide rich stream 62 is compressed (e.g. by compressor 72), then cooled (e.g. by heat exchanger 74 - or in other implementations an air cooler or water cooler), the separated (e.g. at separator 76) to condense and separate remaining water from the carbon dioxide rich stream 62, with the condensate being sent for water treatment via 78. In FIG. 6 the carbon dioxide rich stream 62 is subject to three stages of compression at this point; however, other numbers of stages are also possible (e.g. 1, 2, 3, 4, 5, etc.). In some implementations, the carbon dioxide rich stream 62 after multi-stage compression has been compressed to a gauge pressure (PSIG) of 470, or the in range of 450 - 500 PSIG, or in the range of 400 - 550 PSIG.

From the multi-stage compression unit 56, after the separation of water from the carbon dioxide rich stream 62, the further enriched carbon dioxide stream 80 is combined with a hydrogen stream 82 and fed into deoxidizer reactor 58. Hydrogen is injected into the deoxidizer reactor 58 feed at a stoichiometric ratio to convert any remaining oxygen into water until the O₂ concentration is brought below 10 ppm, or below 50 ppm, or below 100 ppm.

In the particular example shown, the hydrogen stream 82 fed to the deoxidizer reactor 58 is a portion of the hydrogen product stream 50 from the reformer system of FIG. 1. The hydrogen product stream 50 is introduced into a multi-stage compression unit 84 in which it goes through multiple cycles of compression (e.g. at compressor 86), cooling (e.g. at heat exchanger 88 or at an air cooler or a water cooler), and separation from condensation (e.g. at separator 90) to generate hydrogen stream 82 and a condensate stream 92 that is sent for waste water treatment.

After the deoxidizer reactor 58, the carbon dioxide stream is further cooled by heat exchanger 94 (or in other implementations at an air cooler or a water cooler), and the majority of the water produced in the deoxidizer reactor 58 is removed at knock-out drum 96, with the removed water condensate sent for waste water treatment via 98 and the carbon dioxide stream sent to dryer unit 60. At dryer unit 60 the carbon dioxide stream is passed over a desiccant, bringing the water content in the carbon dioxide stream to, in some implementations below 130 ppm, below 100 ppm, or below 70 ppm.

After the dryer unit 60, the carbon dioxide stream 100 is subjected to one or more additional stages of compression (e.g. at compressor 102), cooling (e.g. at heat exchanger 104 or an air cooler or a water cooler), and separation from condensation (e.g. at separator 106), which in some implementations may raise the pressure of the carbon dioxide stream up to 1,800 PSIG, up to 2,000 PSIG, or up to 2,200 PSIG, which may be output from the carbon dioxide capture system as pipeline specification carbon dioxide product at stream 108.

In at least some implementations, because the portion of the flue gas 26 entering the carbon dioxide capture system via stream 52 is mostly carbon dioxide and water (e.g. at least 95 vol% water and carbon dioxide in total, at least 97 vol% water and carbon dioxide in total, or at least 99 vol% water and carbon dioxide in total) and free of impurities such as nitrogen (e.g. less than 5 vol% nitrogen, less than 3 vol% nitrogen, or less than 1 vol% nitrogen) the carbon dioxide product stream 108 generated by the physical separation processes used in the carbon capture system of FIG. 6 may be of high or very high purity. For instance, the carbon dioxide product stream 108 may be 95 vol% carbon dioxide, 97 vol% carbon dioxide, or 99 vol% carbon dioxide in various implementations, and may have less than 5 vol% nitrogen, less than 3 vol% nitrogen, or less than 1 vol% nitrogen in various implementations.

In at least some implementations, because the flue gas 26 generated by the burner 14 of the reformer system is mostly carbon dioxide and water (e.g. at least 95 vol% water and carbon dioxide in total, at least 97 vol% water and carbon dioxide in total, or at least 99 vol% water and carbon dioxide in total) and free of impurities such as nitrogen (e.g. less than 5 vol% nitrogen, less than 3 vol% nitrogen, or less than 1 vol% nitrogen), most if not all of the carbon dioxide exiting the reformer system via stream 52 may be readily captured using the physical separation processes in the carbon capture system of FIG. 6 and output via the carbon dioxide product stream 108. In some implementations, at least 95 vol% of the carbon dioxide in the flue gas stream 52 is outputted as the carbon dioxide product stream 108. In some implementations, at least 97 vol% of the carbon dioxide in the flue gas stream 52 is outputted as the carbon dioxide product stream 108. In some implementations, at least 99 vol% of the carbon dioxide in the flue gas stream 52 is outputted as the carbon dioxide product stream 108.

The carbon dioxide capture system shown in FIG. 6 is just one example of a carbon dioxide capture system that can be used to mechanically separate via cooling and compression (and as opposed to chemical absorption / adsorption based techniques) carbon dioxide from a flue gas. Other arrangements of compressors, coolers, and water separators are also possible.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A process for producing a product gas comprising a hydrogen gas from a hydrocarbon, the process comprising:
(a) introducing a hydrocarbon and a steam into a reformer reaction unit to generate a reformate comprising a hydrogen gas;
(b) as part of generation of the reformate, providing heat to the reformer reaction unit using a burner in a radiant section of a furnace, the reformer reaction unit including at least a portion located in the radiant section of the furnace, wherein the burner receives for combustion: (i) a fuel gas, (ii) an oxygen gas comprising 95.0 - 99.8 vol% oxygen, and (iii) a recycled flue gas, wherein the oxygen gas is provided in a separate stream to the burner from the fuel gas and the recycled flue gas;
(c) wherein the burner generates a flue gas that comprises at least 95 vol% water and carbon in total, wherein a portion of the flue gas is recycled to the burner as the recycled flue gas.

2. The process of claim 1, wherein the oxygen gas received by the burner for combustion comprises 99.0 - 99.8 vol% oxygen.

3. The process of claim 2 wherein the flue gas flows from the radiant section of the furnace through a convection section of the furnace.

4. The process of claim 3 wherein a first portion of the flue gas is collected from or after the convection section and fed back to the burner as the recycled flue gas, and wherein a second portion of the flue gas is collected from or after the convection section and fed to a carbon dioxide capture system in which carbon dioxide of the flue gas is separated from water of the flue gas.

5. The process of claim 4 wherein the first portion of the flue gas is collected from a flue gas recycle outlet of the convection section, wherein the convection section comprises a plurality of heat transfer coils and the flue gas recycle outlet is located upstream of at least one of the coils; optionally, wherein the flue gas recycle outlet is located upstream of an economizer coil; and/or wherein the second portion of the flue gas is collected from a second outlet that is located downstream of the plurality of heat transfer coils.

6. The process of claim 4 wherein the first portion of the flue gas is collected from a flue gas recycle outlet of the convection section at a temperature that is at least 50 degrees Celsius higher than a temperature of the second portion of the flue gas collected from a second outlet of the convection section.

7. The process of claim 4 wherein the burner further receives for combustion a second fuel gas comprising a pressure swing adsorption (PSA) purge gas generated from the reformate; optionally, wherein the flue gas generated by the burner comprises at least 97 vol% water and carbon dioxide in total.

8. The process of claim 4 wherein, at the carbon dioxide capture system, the second portion of the flue gas is cooled such that at least some of the water of the second portion of the flue gas condenses and is separated from the flue gas to generate a carbon dioxide rich stream.

9. The process of claim 8 wherein, at the carbon dioxide capture system, the carbon dioxide rich stream is fed to a multi-stage compression unit in which the carbon dioxide rich stream is subjected to a plurality of cycles of compression, cooling, and condensate separation; optionally, wherein, at the carbon dioxide capture system, after multi-stage compression, the carbon dioxide rich stream is fed to a deoxidizer reactor in which oxygen in the carbon dioxide rich stream is reacted with hydrogen gas to generate water; further optionally, wherein, at the carbon dioxide capture system, after the deoxidizer reactor, the carbon dioxide rich stream is fed to a dryer unit comprising a desiccant.

10. The process of claim 4 further comprising outputting from the carbon dioxide capture system a carbon dioxide product stream, wherein at least 99 % of the carbon dioxide in the second portion of the flue gas is outputted in the carbon dioxide product stream.

11. The process of claim 4 further comprising outputting from the carbon dioxide capture system a carbon dioxide product stream, wherein at least 95 vol% of the carbon dioxide product stream is carbon dioxide.

12. The process of claim 1 wherein providing heat to the reformer reaction unit using the burner comprises introducing the fuel gas into the burner through a fuel gas inlet of the burner, introducing the oxygen gas into the burner through an oxygen gas inlet of the burner separate from the fuel gas inlet, and introducing the recycled flue gas into the burner through a flue gas inlet of the burner separate from the oxygen gas inlet and the fuel gas inlet.

13. A hydrogen production plant reformer system comprising:
(a) a reformer reaction unit arranged to receive a hydrocarbon and a steam and to generate a reformate comprising a hydrogen gas;
(b) a furnace comprising a radiant section and a convection section, the radiant section comprising a burner arranged to heat the reformer reaction unit, the reformer reaction unit including at least a portion located in the radiant section of the furnace, the burner comprising a fuel gas inlet, an oxygen inlet separate from the fuel gas inlet and configured to receive an oxygen stream comprising at least 95 vol% oxygen , and a recycled flue gas inlet separate from the fuel gas and oxygen inlets;
(c)wherein operation of the burner generates a flue gas that flows from the radiant section of the furnace through a convection section of the furnace; optionally, wherein the burner, the fuel gas stream, the oxygen stream, and the recycled flue gas stream are configured such that the flue gas generated by the burner comprises at least 95 vol% water and carbon dioxide in total; optionally, further comprising a carbon dioxide capture system receiving a portion of the flue gas from the reformer system and separating carbon dioxide of the flue gas from water of the flue gas.

14. The hydrogen production plant of claim 13, further comprising a carbon dioxide capture system arranged to receive a portion of the flue gas from the reformer system, the carbon dioxide capture system comprising a quench tower arranged to receive the portion of the flue gas and output a carbon dioxide rich stream.

15. A process for producing a product gas comprising a hydrogen gas from a hydrocarbon, the process comprising:
(a) introducing a hydrocarbon and a steam into a reformer reaction unit to generate a reformate comprising a hydrogen gas;
(b) as part of generation of the reformate, providing heat to the reformer reaction unit using a burner in a radiant section of a furnace, the reformer reaction unit including at least a portion located in the radiant section of the furnace, wherein the burner receives for combustion: (i) a fuel gas, (ii) an oxygen gas comprising 95.0 - 99.8 vol% oxygen, and (iii) a recycled flue gas, wherein the oxygen gas is provided in a separate stream to the burner from the fuel gas and the recycled flue gas;
(c) wherein the burner generates a flue gas that comprises at least 95 vol% water and carbon in total, wherein the flue gas flows from the radiant section of the furnace through a convection section of the furnace, wherein a first portion of the flue gas is collected from or after the convection section and fed back to the burner as the recycled flue gas, and wherein a second portion of the flue gas is collected from or after the convection section and fed to a carbon dioxide capture system in which carbon dioxide of the flue gas is separated from water of the flue gas; and
(d) outputting from the carbon dioxide capture system a carbon dioxide product stream, wherein at least 99 % of the carbon dioxide in the second portion of the flue gas is outputted in the carbon dioxide product stream, wherein at least 95 vol% of the carbon dioxide product stream is carbon dioxide.
